# EUROPÄISCHE PATENTANMELDUNG

(11) **EP 0 533 987 A1**
(43) Veröffentlichungstag der Anmeldung: **31.03.1993**
(21) Anmeldenummer: 91116537.1
(22) Anmeldetag: 27.09.1991
(51) Int. Cl.: F21V 8/00, F21V 25/12

(54) **Fassleuchte**

(71) Anmelder: Papenmeier, Friedrich Horst, D-58239 Schwerte (DE)
(72) Erfinder: Papenmeier, Friedrich Horst, D-58239 Schwerte (DE)
(74) Vertreter: Schwabe - Sandmair - Marx

(57) **Zusammenfassung**

Bei einer Faßleuchte zum Ausleuchten von Fässern (10), insbesondere von explosionsgefährdeten Faßinnenräumen der Zone Null, mit einer Leuchte, die ein Leuchtengehäuse (4) mit einer Lichtquelle und einen Lichtleiterausgang aufweist, einem an den Lichtleiterausgang angeschlossenen Lichtleiter (5), einem Leuchtenkopf (6) am Ende des Lichtleiters (5) und mit einer Energiezuführung (12) zum Leuchtengehäuse ist das Leuchtengehäuse (4) in einem Leuchtenständer (1) bewegbar gelagert.

## Beschreibung

Die vorliegende Erfindung betrifft eine Faßleuchte der im Oberbegriff des Anspruchs 1 angegebenen Gattung.

Zum Ausleuchten des Innenraums eines Fasses werden sogenannte Faßleuchten benutzt, insbesondere zum Ausleuchten von explosionsgefährdeten Faßinnenräumen der sogenannten Zone "0" kommen spezielle Faßleuchten mit Lichtleiterausgang zur Übertragung von Kaltlicht zum Einsatz.

Aus dem deutschen Gebrauchsmuster DE-GM 74 25 752.6 ist eine solche Faßleuchte bekannt, bei der eine Niedervoltlampe und ein dazugehöriger Transformator in einem druckfest gekapselten Gehäuse angeordnet sind. In dem Gehäuse ist vor der Niedervoltlampe ein druckfestes Schauglas eingelassen, und auf dem Schauglas wiederum ist ein flexibler Lichtleiter angeordnet.

Ebenfalls eine Faßleuchte für explosionsgefährdete Bereiche wird durch das deutsche Gebrauchsmuster DE-GM 78 13 602 gelehrt, deren Stromversorgungsteil und Beleuchtungssystem in einem ersten Gehäuse angeordnet sind, das mit einem Lichtleitkabel zur Leitung des vom Beleuchtungssystem ausgesandten Lichtstroms an einen Ort, der den Bedingungen des Explosionsschutzes unterworfen ist, verbunden ist. Das von diesem Gehäuse abgewandte Endstück des Lichtleitkabels mündet in ein weiteres Gehäuse, das als Leuchtenkopf dienend mindestens eine Sammellinse für den aus der Stirnfläche des Lichtleitkabels austretenden Lichtstroms enthält.

Noch eine weitere Ausführung einer Leuchte mit einem Lichtleiterausgang wird durch das deutsche Gebrauchsmuster DE-GM 81 38 173.5 offenbart.

Die vorbekannten Ausführungsformen einer Faßleuchte, die insbesondere für den Einsatz innerhalb gefährlicher, explosionsgefährdeter Bereiche geeignet sind, weisen ein an dem Leuchtengehäuse angebrachtes Lichtleitkabel auf, mit einem Leuchtenkopf am freien Ende. Das Lichtleitkabel, im folgenden kurz Lichtleiter genannt, ist dabei in allen Fällen starr am Leuchtengehäuse befestigt. Zum Ausleuchten eines Fasses muß das Bedienungspersonal das Lichtleitkabel durch eine Faßöffnung in das Faßinnere einführen und während des Ausleuchtens halten und weiterhin führen. Das Leuchtengehäuse selbst kann dabei in der Nähe des Fasses abgestellt oder in der Hand getragen werden. Somit ist während des gesamten Ausleuchtvorgangs die Anwesenheit des Bedienungspersonals in der explosionsgefährdeten Zone (Zone "0") notwendig. In der Praxis erweisen sich diese Faßleuchten als umständlich in der Handhabung, behindern die Bewegungsfreiheit und sind darüberhinaus auch allzu kompliziert aufgebaut.

Der Erfindung liegt daher die Aufgabe zugrunde, eine Faßleuchte, insbesondere für den Einsatz in explosionsgefährdeten Bereichen der Zone "0", zu schaffen, die nicht die Nachteile der aus dem Stand der Technik bekannten Lösungen aufweist; insbesondere soll eine Faßleuchte geschaffen werden, die bequem zu handhaben und gleichzeitig einfach aufgebaut ist.

Dies wird durch den Gegenstand des Anspruchs 1 erreicht.

Vorteilhafte und nicht glatt selbstverständliche Ausgestaltungen der Erfindung werden durch die Merkmale der Unteransprüche offenbart.

Der Vorteil der Erfindung liegt darin begründet, daß das Leuchtengehäuse einer Faßleuchte, insbesondere einer Faßleuchte für den Einsatz in explosionsgefährdeten Bereichen der Zone "0", beweglich in einem Leuchtenständer gelagert ist. Durch die Erfindung kann somit die Faßleuchte im Leuchtenständer auf einem Faß abgestellt und der in das Faßinnere eingetauchte Lichtleiter mit dem an seinem freien Ende angebrachten Leuchtenkopf im Inneren des Fasses leicht bewegt werden, wodurch eine besonders sorgfältige Ausleuchtung und Untersuchung des Faßinneren ermöglicht wird. Diese Art der Leuchtenbefestigung bzw. -lagerung begünstigt somit beispielsweise eine schematische Untersuchung der Faßinnenflächen, insbesondere auf Sauberkeit und Korrosion und dergleichen.

Ganz besonders vorteilhaft ist es, wenn das Leuchtengehäuse in dem Leuchtenständer drehbar bzw. kippbar gelagert ist. Grundsätzlich ist es jedoch auch denkbar, das Leuchtengehäuse im Leuchtenständer verschiebbar oder in anderer geeigneter Weise zu lagern.

Damit der Lichtleiter mit dem daran angebrachten Leuchtenkopf nicht manuell in einer vorbestimmten Lage gehalten werden muß, ist zweckmäßigerweise eine Arretierung der beweglich gelagerten Leuchte vorgesehen.

Eine weitere vorteilhafte Ausgestaltung der Erfindung besteht darin, das Leuchtengehäuse im Leuchtenständer oder das Lichtleitkabel selbst wiederum im Leuchtengehäuse drehbar zu lagern, und zwar um eine weitere Achse, die bevorzugt in etwa senkrecht auf der ersterwähnten Drehachse des Leuchtengehäuses steht. Dadurch wird ein zusätzlicher Freiheitsgrad für die Bewegungen des Lichtleiters geschaffen. Auch diese Drehlagerung ist vorteilhafterweise mit einer Arretierung versehen.

Der Lichtleiter selbst kann während des Einsatzes verformbar, oder auch starr ausgebildet sein. In starrer Ausbildung ist er ganz besonders vorteilhaft um seine Mittelachse in etwa rechtwinklig abgebogen, so daß er in das Faßinnere getaucht ist, während das im Leuchtenständer drehbar gelagerte Leuchtengehäuse auf der Faßoberfläche neben der Faßöffnung sicher steht.

Die Flexibilität der erfindungsgemäßen Faßleuchte wird weiterhin dadurch erhöht, daß auch der Leuchtenständer die Möglichkeit der Verfahrbarkeit bietet, insbesondere durch an seiner Unterseite angeordnete Rollen. Gleichzeitig wird die Handhabbarkeit der Faßleuchte damit verbessert. Die Unterseite des Leuchtenständers ist zweckmäßigerweise der Kontur des jeweiligen Fasses, das auszuleuchten ist, angepaßt oder anpaßbar. So kann beispielsweise das gleiche Leuchtengehäuse in verschiedenen, dem jeweiligen Einsatz angepaßten Leuchtenständern eingesetzt oder ein Leuchtenständer unterschiedlichen Faßkonuren angepaßt werden.

Um trotz der Verfahrbarkeit des Leuchtenständers einen ruhenden Haltepunkt für das in das Faßinnere eingetauchte Lichtleitkabel zu haben, ist beispielsweise an der Unterseite des Leuchtenständers bevorzugterweise zumindest ein geeignetes Halteorgang angebracht. Je nach der Beschaffenheit der Faßoberfläche kann dieses Halteorgan durch zumindest einen Haftmagneten oder ein Saugorgan gebildet werden oder aber aus einer geeigneten Kombination der verschiedensten Halteorgane.

Durch den kombinierten Einsatz der erfindungsgemäßen Faßleuchte mit einem Okular kann eine besonders gründliche Inspizierung des Faßinneren durchgeführt werden. Durch die Ausbildung der Faßleuchte gemäß der Erfindung wird nämlich die seitliche Anbringung eines an einem Glasfaserstab befestigten Okulars am Lichtleitkabel ermöglicht.

Die Erfindung wird nachstehend anhand einer bevorzugten Ausführungsform unter Bezugnahme auf die Zeichnungen im einzelnen erläutert. Dabei werden weitere Vorteile und Merkmale der vorliegenden Erfindung offenbart. Es zeigen:
- Fig. 1: eine Seitenansicht mit einem Teilschnitt einer auf einem Faß stehenden Faßleuchte mit einem rechtwinklig abgebogenen starren Lichtleiter;
- Fig. 2: eine Vorderansicht der Faßleuchte;
- Fig. 3: einen am freien Ende des Lichtleiters angebrachten Leuchtenkopf mit einem seitlich am Lichtleiter befestigten Okular.

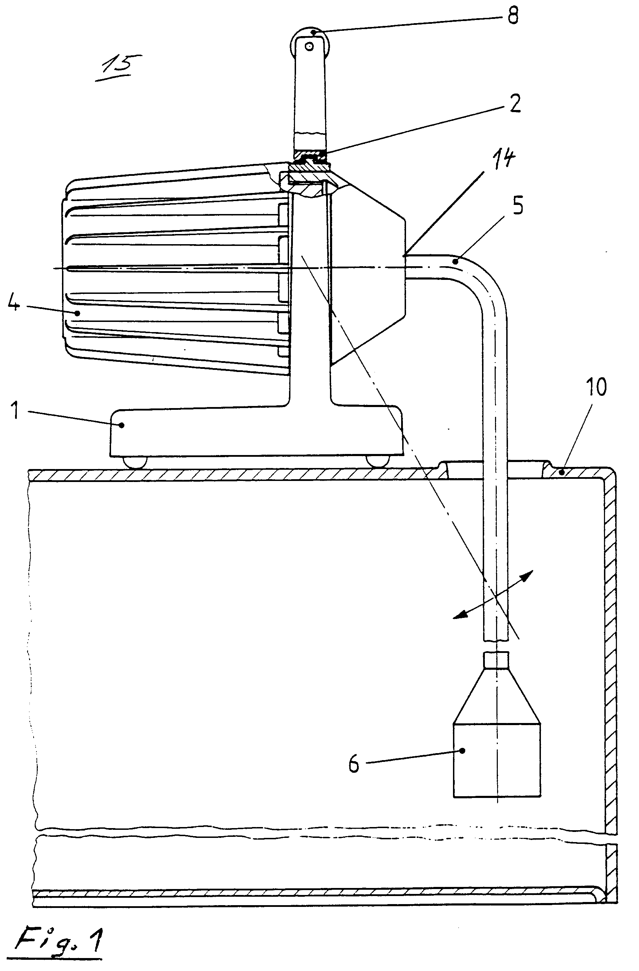

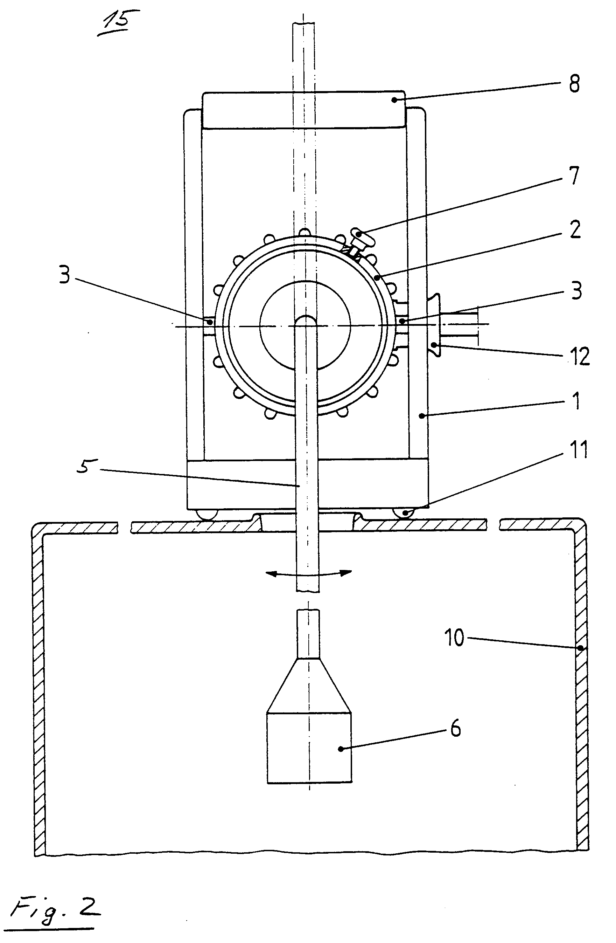

Eine in den Figuren 1 und 2 dargestellte Faßleuchte 15 weist einen Leuchtenständer 1 auf, in dem ein Leuchtengehäusering 2 über zwei Zapfen 3 drehbar, d.h. um seine Mittelachse kippbar, gelagert ist. Im Leuchtengehäusering 2 wiederum ist ein Leuchtengehäuse 4 drehbar um seine Mittelachse gelagert. Im Leuchtengehäuse 4 ist eine nicht dargestellte Lichtquelle angeordnet, die über eine Zuführung 12, die in Fig. 2 dargestellt ist, mit elektrischer Energie versorgt wird. Ein Lichtleitkabel, kurz Lichtleiter 5, an dessem freien, dem Leuchtengehäuse 4 abgewandten Ende sich ein Leuchtenkopf 6 befindet, der in das Innere eines auszuleuchtenden Fasses 10 eingetaucht wird, ist starr am Leuchtengehäuse 4 befestigt. Der starre Lichtleiter 5 ist in etwa rechtwinklig um seine Mittelachse gebogen.

Das Leuchtengehäuse 4 selbst ist im Gehäusering 2 um ca. 180° aus der in den Figuren 1 und 2 dargestellten Lage verdrehbar. Der um 180° verdrehte Lichtleiter 5 ist in Fig. 2 in gestrichelten Linien dargestellt. Mittels einer im Gehäusering 2 angeordneten Rändelschraube 7 ist das Leuchtengehäuse 4 in jeder Stellung gegenüber dem Gehäusering 2 arretierbar. Die Arretierung der drehbar gelagerten Zapfen 3 im Leuchtenständer 1 ist nicht dargestellt.

Die Handhabung dieser Faßleuchte ist denkbar einfach. Während des Einführens des Lichtleiters 5 mit dem Leuchtenkopf 6 durch die Öffnung des Fasses 10 kann der Leuchtenständer 1 mit Leuchtengehäuse 4 an einem Handgriff 8 gehalten und nach dem Einführen auf der Faßoberfläche abgestellt werden. Auf Kugelrollen 11, die an der Unterseite des Leuchtenständers 1 angebracht sind, ist der Leuchtenständer 1 auf dem Faß 10 leicht rangierbar. Ist die Arbeitsposition gefunden, läßt sich der Leuchtenständer 1 durch geeignete, nicht dargestellte Halteorgane auf der Oberfläche des Fasses 10 arretieren und bietet dadurch eine ruhige Halteposition zum Arbeiten mit dem eingetauchten Lichtleiter 5.

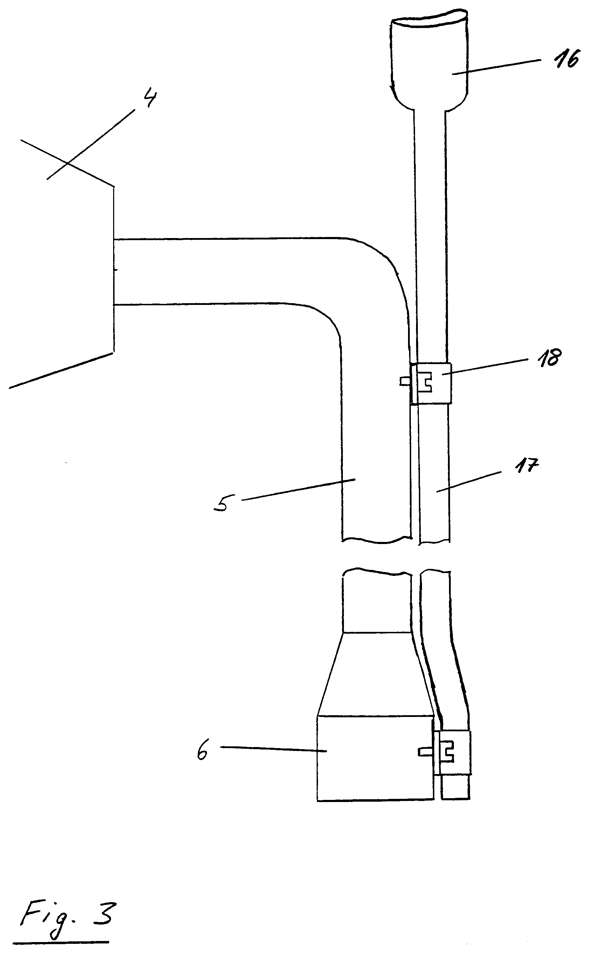

Diese Faßleuchte 15 kann nicht nur als ruhige Plattform für ihren eigenen Leuchtenkopf 6 dienen, sondern kann, wie in Fig. 3 dargestellt, auch als Halte- oder Standvorrichtung für ein an einem Glasfaserstab 17 angeordnetes Okular 16 genutzt werden. Der Glasfaserstab 17 des Okulars 16 ist dabei starr über Schellen 18 mit dem Lichtleiter 5 bzw. dem Leuchtenkopf 6 verbunden. Dadurch wird eine gründliche Inspektion des Faßinneren auch bei übel riechenden Gasresten ermöglicht.

## Patentansprüche

1. Faßleuchte zum Ausleuchten von Fässern, insbesondere von explosionsgefährdeten Faßinnenräumen der Zone Null,
a) mit einer Leuchte (15), die ein Leuchtengehäuse (4) mit einer Lichtquelle und einen Lichtleiterausgang (14) aufweist,
b) mit einem an den Lichtleiterausgang (14) angeschlossenen Lichtleiter (5),
c) mit einem Leuchtenkopf (6) am Ende des Lichtleiters (5), und
d) mit einer Energiezuführung (12) zum Leuchtengehäuse (4),
**dadurch gekennzeichnet,** daß
e) das Leuchtengehäuse (4) in einem Leuchtenständer (1) bewegbar gelagert ist.

2. Faßleuchte nach Anspruch 1, dadurch gekennzeichnet, daß das Leuchtengehäuse (4) in dem Leuchtenständer (1) drehbar gelagert ist.

3. Faßleuchte nach Anspruch 2, dadurch gekennzeichnet, daß das Leuchtengehäuse (4) um zwei Achsen drehbar in dem Leuchtenständer (1) gelagert ist.

4. Faßleuchte nach einem der Ansprüche 1 bis 3, dadurch gekennzeichnet, daß das Leuchtengehäuse (4) gegenüber dem Leuchtenständer (1) arretierbar ist.

5. Faßleuchte nach einem der Ansprüche 1 bis 4, dadurch gekennzeichnet, daß der Lichtleiter (5) starr ausgebildet ist.

6. Faßleuchte nach einem der Ansprüche 1 bis 5, dadurch gekennzeichnet, daß die Mittelachse des Lichtleiters (5) in etwa rechtwinklig zur Mittelachse des Leuchtengehäuses (4) abgebogen ist.

7. Faßleuchte nach einem der Ansprüche 1 bis 4, dadurch gekennzeichnet, daß der Lichtleiter (5) verformbar ausgebildet ist.

8. Faßleuchte nach einem der Ansprüche 1 bis 7 dadurch gekennzeichet, daß der Leuchtenständer (1) an seiner Unterseite Rollen (11) aufweist und verfahrbar ist.

9. Faßleuchte nach einem der Ansprüche 1 bis 8, dadurch gekennzeichnet, daß der Leuchtenständer (1) in seiner jeweiligen Arbeitsposition auf dem Untergrund arretierbar ist.

10. Faßleuchte nach Anspruch 9, dadurch gekennzeichnet, daß zur Arretierung zumindest ein Haftmagnet und/oder ein Saugorgan vorgesehen ist.

11. Faßleuchte nach einem der Ansprüche 1 bis 10, dadurch gekennzeichnet, daß die Unterseite des Leuchtenständers (1) der Form der Oberfläche eines Fasses (10) anpaßbar ist.

12. Faßleuchte nach einem der Ansprüche 1 bis 11, dadurch gekennzeichnet, daß an dem in das Faß (10) eingetauchten Teilstück des Lichtleiters (5) ein Glasfaserstab (17) mit einem Okular (16) zur Beobachtung des Innenraumes des Fasses (10) angeordnet ist.
